# EUROPÄISCHE PATENTSCHRIFT

(11) **EP 0 683 906 B1**
(45) Veröffentlichungstag und Bekanntmachung des Hinweises auf die Patenterteilung: **25.09.1996**
(21) Anmeldenummer: 94908259.8
(22) Anmeldetag: 17.02.1994
(51) Int. Cl.: G05G 9/047, H01H 25/04, B66C 13/56

(54) **HANDSTEUERGERÄT MIT EINEM STEUERKNÜPPEL**
MANUAL CONTROLLER WITH CONTROL LEVER
APPAREIL MANUEL DE COMMANDE A LEVIER DE COMMANDE

(30) Priorität: 20.02.1993 DE 4305282; 03.03.1993 DE 4306577
(43) Veröffentlichungstag der Anmeldung: 29.11.1995
(73) Patentinhaber: NBB NACHRICHTENTECHNIK GmbH & Co. KG, D-75248 Ölbronn-Dürrn (DE)
(72) Erfinder: WÜSTENBERG, Dieter, D-67661 Kaiserslautern (DE); MOHRBACH, Raymond, L-2222 Luxemburg (LU); BREDOW, Wolfgang, D-75217 Birkenfeld (DE); BURCHARD, Thomas, D-75180 Pforzheim (DE); FAZLER, Rolf, D-75447 Sternenfels (DE); HAUG, Thomas, D-75249 Kieselbronn (DE); ELSÄSSER, Fabian, D-75334 Straubenhardt (DE)
(74) Vertreter: Frank, Gerhard, Dipl.-Phys.
(86) Internationale Anmeldenummer: DE9400195
(87) Internationale Veröffentlichungsnummer: WO9419735

(56) Entgegenhaltungen:
- DE-B- 1 217 481
- DE-C- 654 375
- DE-C- 895 869
- FR-A- 2 505 064
- FR-A- 2 559 305
- GB-A- 1 350 073
- US-A- 4 470 320
- US-A- 5 043 709
- US-A- 5 068 498

## Beschreibung

### Technisches Gebiet der Erfindung

Die Erfindung betrifft ein Handsteuergerät gemäß dem Oberbegriff des Patentanspruchs 1.

Derartige Handsteuergeräte sind ein aus vielen Anwendungsgebieten bekanntes Steuerglied; am bekanntesten dürften sie durch die Bedienung von Computern sein (hier als "Joystick" bezeichnet), sie werden aber auch zum Steuern und Lenken, insbesondere Fernsteuern von realen Körpern eingesetzt, wie z.B. Kränen, Hebezeugen, usw.

Das Handsteuergerät weist einen Steuerknüppel als einziges Betätigungsorgan auf, das in zwei unabhängige Richtungen beweglich ist und dessen Bewegung in jeder einzelnen Hauptrichtung (x oder y) auf ein Übertragungsglied wirkt. Zwei Übertragungsglieder sind folglich Bestandteile von Wandlereinrichtungen, die die Auslenkung des Steuerknüppels in ein elektrisches Signal umsetzen; hierbei kann das Handsteuergerät sowohl als Ein/Aus-Schalter als auch als proportionales Stellglied verwendet werden, bei dem die elektrischen Ausgangssignale in beiden Hauptrichtungen proportional zur jeweiligen Auslenkung des Steuerknüppels in der zugehörigen Hauptrichtung ist.

Um eine solche Verschwenkung des Steuerknüppels zu erreichen, muß dieser in einem Gehäuse verschwenkbar gelagert und gehalten sein; es muß einerseits eine ausreichende Auslenkung (Auslenkewinkel) gewährleistet sein, andererseits aber eine möglichst präzise Definition einer Nullstellung, d.h. eines Raumpunktes, in dem die Wandlereinrichtungen kein elektrisches Signal abgeben.

Derartige Lagerungen sind in vielen konstruktiven Varianten bekannt, in der Regel wird entweder ein Kardangelenk oder ein Kugelgelenk oder Schwenkbügel eingesetzt, oder Kombinationen dieser Bauteile, von denen dann jeweils eines einer Hauptrichtung (x oder y) hinsichtlich der Verschwenkung zugeordnet ist.

Derartige Schwenklager sind zwar mit großer Präzision ausführbar, erfordern jedoch einen erheblichen Aufwand hinsichtlich Fertigungspräzision und Montage, so daß Schwenklagerungen einen beträchtlichen Kostenfaktor bei Handsteuergeräten ausmachen.

Darüber hinaus sind derartige Schwenklager auch relativ platzaufwendig und vergrößern dadurch den Raumbedarf und das Gewicht des gesamten Handsteuergerätes, wiederum auch mit der Folge zusätzlicher Materialkosten.

### Stand der Technik

Ein Beispiel für die aufwendige Gestaltung des Schwenklagers bei einem Handsteuergerät zeigt die DE 32 36 481 A1; der Schwenkpunkt 17 wird mittels einer Kardanaufhängung 13 definiert. Eine elastische Scheibe 40 ist horizontal gleitverschiebbar im Abstand zum Drehpunkt 17 gelagert und dient als Kontaktelement für seitlich angeordnete Arbeitskontakte 45, wenn sie seitlich verschoben wird aufgrund einer Auslenkung des Steuerhebels 11.

Es ist auch bekannt, in Joysticks für Videospiele das Schwenklager als Elastomergelenk auszubilden. Bei diesen Joystick-Anordnungen betätigt der Steuerknünpel (Schaft) an seinem unteren Ende eine Vielzahl von Scnaltern (oder Mikroschaltern), die bei entsprechender Auslenkung des Steuerknüppels alternativ betätigt werden können und die gewünschte Schaltfunktion auslösen. Insofern handelt es sich bei diesen Joysticks um Mehrfachschalter, bei denen eine Kontaktherstellung aus einer Mehrzahl von möglichen Kontakten durch die richtungsabhängige Auslenkung des Steuerknüppels bis zu einem bestimmten Schaltwinkel ausgewählt und betätigt wird.

Zur genaueren Definition von Schaltpositionen ist es aus anderen Druckschriften bekannt (DE-C 654 375 oder DE-B 1 217 481 oder GB-A-1350073), am unteren Ende eines Steuerknüppels auf einer kugelschalenähnlichen Oberfläche Führungsbahnen und Rastnäpfe anzuordnen, deren räumliche Anordnung derart auf die räumliche Anordnung der Schaltkontakte abgestimmt ist, daß jedem Schaltkontakt eine Vertiefung zugeordnet ist, in die der Steuerknüppel bei seiner Verschwenkung einrasten kann.

Die gattungsbildende DE-C-895 869 beschreibt einen Steuerhebel, dessen Schwenklager von einer "elastischen Masse" aus Kautschuk gebildet wird, die eine Verdickung des Steuerhebels ringartig umschließt. Das untere Ende des Steuerhebels ist zu nicht näher erläuterten Schaltzwecken in einem Hohlzylinder geführt. Die seitliche Ausschwenkung des Steuerhebels kann theoretisch über einen relativ großen Winkel erfolgen und im Bedarfsfall durch Führungsorgane stabilisiert werden. Ein solches Führungsorgan ist als bügelähnliche Vorrichtung skizziert, die oberhalb des Schwenkpunktes am Steuerhebel sitzt und offenbar einen ringähnlichen Aufsatz gleitend übergreifen soll.

### Gegenstand der Erfindung

Die eingangs beschriebenen Elastomergelenke haben sämtlich Eingang gefunden in Joysticks, bei denen zur Betätigung der Schalter nur eine sehr geringe Winkelauslenkung erforderlich ist, d.h., die elastische Deformierung des Elastomergelenks ist nur geringfügig und eine präzise Fixierung der Schwenkachse im Hinblick auf die Schaltkontakte in der Regel auch nicht notwendig. An die Funktion eines solchen Elastomergelenks muß daher bei den vorbekannten "Joystick-Mehrfachschaltern" keine besonderen Präzisionsanforderungen gestellt werden.

Gegenstand der Erfindung bilden jedoch solche Handsteuergeräte, die als proportionales Stellglied in beide Hauptachsenrichtungen verwendet werden, d.h. bei dem die elektrischen Ausgangssignale in beiden Hauptrichtungen proportional zur jeweiligen Auslenkung des Steuerknüppels in der zugehörigen Hauptrichtung ist. Wie oben schon erwähnt, erfordert dies einen relativ großen Auslenkewinkel, über den eine präzise und definierte Führung des Knüppels gewährleistet sein muß, was (siehe oben) bisher mit Kardangelenken oder Kugelgelenken als Lager erreicht wurde, oder durch ein stabilisiertes Elastomergelenk (DE-C-895 869). Letzteres ist zum praktischen Dauereinsatz nicht geeignet, im wesentlichen schon wegen der Formgebung des Elastomergelenks, die ein Herausspringen des Steuerhebels bei großen Auslenkungswinkeln nicht ausschließen kann. Da nur relativ kleine Volumenbereiche dieses vorbekannten Elastomergelenks extrem auf Zug und Stauchung beansprucht werden, stellen sich unvermeidlich starke Materialermüdungen in diesen Bereichen ein, die eine ausreichende Standzeit dieses Steuerhebels bei industrieller Dauerbeanspruchung nahezu ausschließen.

Darüber hinaus ist das skizzierte Führungsorgan zur Stabilisierung des Elastomergelenks nur bedingt zur Erfüllung dieser angestrebten Funktion geeignet, da es offenbar nur eine Schwenkrichtung abdeckt; zudem ist es sehr platzaufwendig und erfordert demnach auch einen hohen Materialaufwand.

Es ist eine Aufgabe der Erfindung, das Elastomer-Schwenklager eines gattungsgemäßen Handsteuergerätes konstruktiv einfacher und platzsparender auszubilden, so daß bei Herstellung und Montage wesentliche Kosteneinsparungen erzielbar sind.

Darüber hinaus sollte auch eine weitgehende Wartungsfreiheit und Bedienungssicherheit des Schwenklagers auch bei industrieller Dauerbelastung gewährleistet sein.

Erfindungsgemäß wird diese Aufgabe gemäß dem kennzeichnenden Teil des Patentanspruchs 1 gelöst.

Es hat sich herausgestellt, daß auch bei größeren Auslenkungswinkeln ein Elastomergelenk als einziges Gelenkbauteil, d.h. ein Gelenkelement aus elastischem Stoff, beispielsweise Gummi oder gummiähnlichen Kunststoffen, bei geeigneter Dimensionierung einerseits eine präzise Lagerung im oben erläuterten Sinne ergibt, wenn der Steuerknüppel durch die Kugeloberfläche des Formteils geführt wird, andererseits durch seine Einstückigkeit mehrere mechanische Bauelemente gegenüber den bisherigen Lösungen einspart und darüber hinaus die bei den meisten Handsteuergeräten gewünschte Rückstellwirkung zumindest teilweise erzeugt, so daß auf separate Rückstellelemente zur Rückführung des Steuerknüppels in seine vertikale Nullposition entweder vollständig verzichtet werden kann, oder diese entsprechend kleiner dimensioniert werden können.

Darüber hinaus weist Gummi oder ein entsprechender Kunststoff auch eine Dichtfunktion insbesondere gegenüber Feuchtigkeitseinflüssen von außen auf, gegenüber denen das Innere des Gehäuses geschützt werden muß, da sich dort in der Regel die elektro-mechanischen Wandlereinrichtungen befinden, deren Funktionssicherheit durch Eindringen von Feuchtigkeit naturgemäß beeinträchtigt würde.

Bei den vorbekannten Lösungen sind bei solchen Handsteuergeräten, die insbesondere auch im Freien zum Einsatz kommen können, in der Regel besondere Abdeckungen wie z.B. Dichtmanschetten vorgesehen, die wiederum eine Erhöhung des Bauvolumens und der Kosten mit sich bringen.

Das erfindungsgemäße Elastomergelenk als einfach zu fertigendes, einstückiges Bauteil im Zusammenhang mit dem ebenfalls einstückig fertigbaren Boden (Formteil) ersetzt somit eine ganze Reihe von bisher erforderlichen Bauteilen für Lagerung, Rückstellung und Abdichtung oder vereinfacht zumindest deren konstruktive Ausgestaltung.

Grundsätzlich ist hierzu anzumerken, daß natürlich durch eine spezielle Formgebung des Elastomergelenkes auch dessen Dicht- und insbesondere Federungseigenschaften vorgegeben werden können, beispielsweise kann eine bestimmte Rückstellcharakteristik des Steuerknüppels zumindest näherungsweise durch geeignete Formung des Elastomergelenks erreicht werden. Hierbei sind mannigfache Variationen denkbar, beispielsweise unterschiedliche Rückstellcharakteristiken in den beiden orthogonalen Hauptrichtungen durch asymmetrische Ausbildung der Gelenkscheibe. Es ist beispielsweise auch ohne weiteres einsichtig, daß ein "straffes" Ansprechen oder eine eher "weiche" Rückstellcharakteristik beispielsweise durch eine geeignete Querschnittsvariation von der Längsachse des Steuerknüppels hin zum Gehäuse erfolgen kann, in dem die Elastomerscheibe umfangsseitig gelagert ist.

Es besteht auch die Möglichkeit, die Rückstellwirkung des Elastomergelenkes durch ein zusätzliches Rückstellelement zu unterstützen bzw. die angestrebte "Rückstellkennlinie" durch Hinzufügen eines solchen zusätzlichen Rückstellelementes im Zusammenwirken mit dem Elastomergelenk zu erreichen.

Weitere Ausgestaltungen betreffen die Ausbildung des Formteils als Rasteinrichtung, die dem Benutzer zusammen mit der präzisen Auslenkbewegung des Steuerknüppels eine sensorische Stellinformation über die aktuelle Auslenkung vermittelt.

### Kurze Beschreibung der Zeichnungen:

Ein Ausführungsbeispiel des erfindungsgemäßen Handsteuergerätes wird nun anhand der Zeichnungen näher erläutert, die zur Verdeutlichung der Funktion lediglich die erfindungswesentlichen Bauteile des Handsteuergerätes enthalten, insbesondere sind bekannte Einrichtungsteile wie Handgriff und Wandlerelemente nicht dargestellt. Grundsätzlich kann hier eine Vielzahl von an sich bekannten Einrichtungen auch beim erfindungsgemäßen Handsteuergerät verwendet werden, so daß auch hier auf eine detaillierte Beschreibung dieser Bestandteile verzichtet werden kann.

Es zeigen:
- Figur 1:: einen schematischen Schnitt durch ein Handsteuergerät,
- Figur 2:: einen weiteren Schnitt zur Darstellung eines Elastomergelenks 30 nach der Erfindung,
- Figur 3:: eine Schnittdarstellung einer bevorzugten Ausführung des Elastomergelenks 30,
- Figur 4:: eine perspektivische Gesamtansicht eines eine Rasteinrichtung bildenden Formteils 10A,
- Figur 5:: eine schematische Funktionsdarstellung des Formteils 10A (Schnitt A-A der Figur 4) im Zusammenwirken mit dem Steuerknüppel,
- Figur 6:: eine Aufsicht auf das Formteil 10A der Figur 4 mit Bemaßungsbeispielen,
- Figur 7:: einen Querschnitt durch das Formteil 10A in der Vertikalebene A-A bzw. B-B der Figur 6 und
- Figur 8:: Schnittdarstellung des Details X der Figur 7.

### Beschreibung des Ausführungsbeispiels

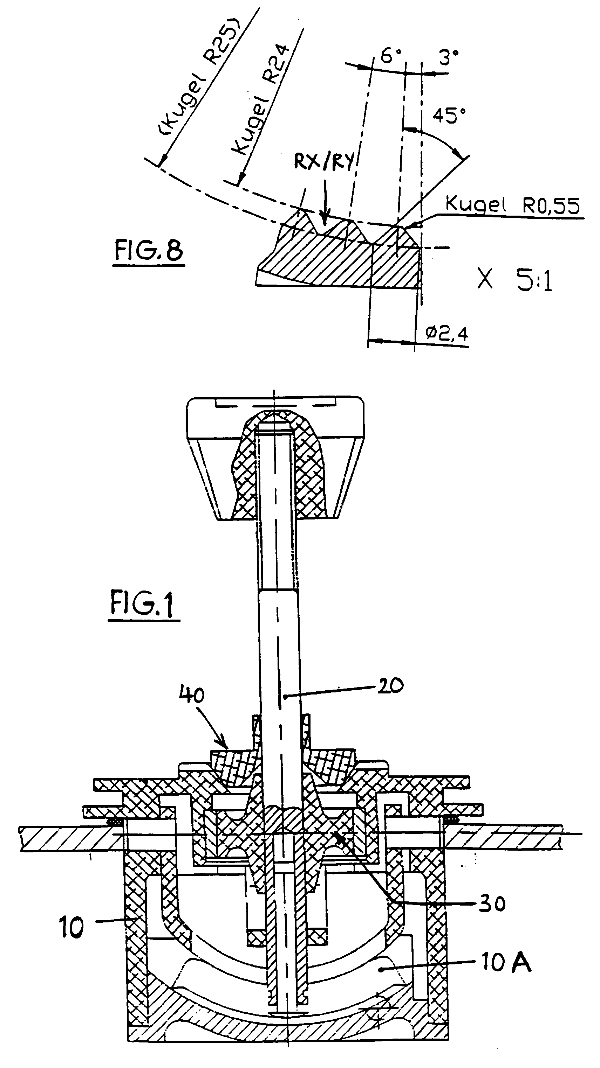

Die wesentlichen Bestandteile des Handsteuergerätes (Figur 1) sind ein Gehäuse 10 mit einem Formteil 10A als Boden, ein in dieses Gehäuse 10 ragender Steuerknüppel 20, ein Gelenk 30, das als Lagerelement des Steuerknüppels 20 im Gehäuse 10 dient, und ein separates Rückstellelement 40, das in kontrollierter Weise die Rückstellwirkung des Elastomergelenks 30 unterstützt.

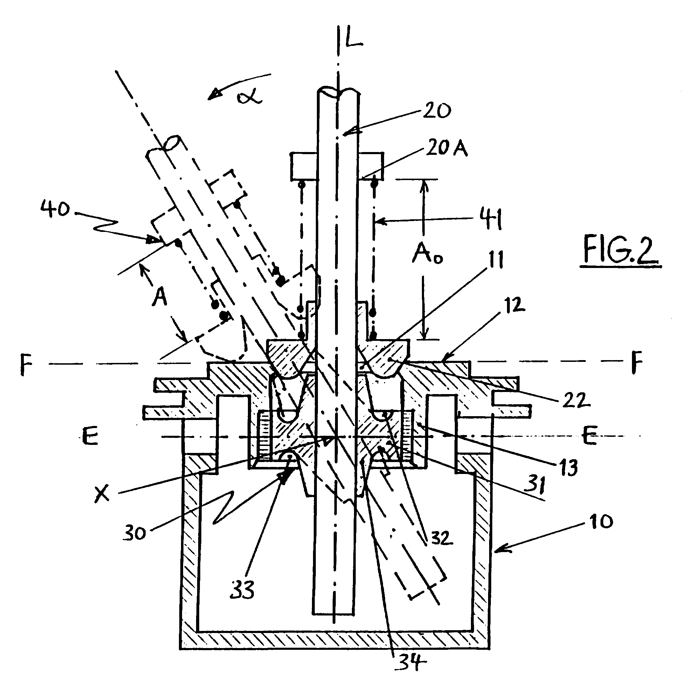

In der Querschnittsdarstellung der Figur 2 ist die Null-Lage des Steuerknüppels in seiner vertikalen Position beim Auslenkwinkel α=0 in durchgezogenen Linien dargestellt, die um den Winkel α>0 verschwenkte Lage in einer Auslenkungsposition des Steuerknüppels 20 mit gestrichelten Linien angedeutet.

Das in bekannter Weise topfähnlich ausgebildete Gehäuse 10 weist an seiner Oberseite 12 eine runde Öffnung auf, an die sich nach unten, zum Inneren des Gehäuses hin ein zylindrischer Fortsatz 13 anschließt. In der Innenwandung dieses zylindrischen Fortsatzes 13 befindet sich eine Ringnut oder Ausnehmung, in der eine um die Längsachse L des Steuerknüppels 20 rotationssymmetrisch ausgebildete Elastomerscheibe 31 als Gelenk gehalten ist, die im übrigen auch symmetrisch zu ihrer Mittelebene E-E ausgeführt ist. Diese Elastomerscheibe 31 ist in ihrem Mittelbereich, in dem sie den Steuerknüppel 20 umschließt, manschettenartig an diesem nach oben und nach unten fortgesetzt, so daß eine sichere Umschließung und Fixierung des Steuerknüppels 20 in der einmal eingestellten Position gewährleistet ist. Diese Lösung hat den Vorteil, daß die angestrebte Rückstellwirkung vergrößert wird, da zumindest ein Teil der Rückstellkräfte bzw. Drehmomente vom Drehpunkt X weiter entfernt angreifen.

Unmittelbar nach außen anschließend an diesen manschettenartigen Mittelbereich 34 befinden sich auf der Ober- und Unterseite der Elastomerscheibe zwei Ringnuten 32,33 mit etwa halbkreisförmigem Querschnitt. Diese Zuordnung von Manschette einerseits und Ringnuten andererseits erhöht den praktisch wirksamen Verformungsbereich des Elastomergelenkes und entlastet die Manschette von zu starken Verformungen, die durch die Ringnut bewirkte Verringerung des Materialquerschnittes erleichtert auch die Verschwenkung des Steuerknüppels, da sie sowohl definierte Dehnungsbereiche, als auch definierte Stauchbereiche auf der jeweils gegenüberliegenden Seite der Elastomerscheibe auszubilden gestatten. Die Wahl von Materialstärke und Querschnitt der Elastomerscheibe ist somit in großen Grenzen abstimmbar auf die gewünschte Rückstellcharakteristik bei gleichzeitiger Aufrechterhaltung einer möglichst exakten Fixierung des Schwenkpunktes X. Hierbei muß natürlich eine Optimierung dieser beiden Funktionsparameter angestrebt werden, da diese gegensinnige Anforderungen an die Konzeption der Elastomerscheibe stellen können.

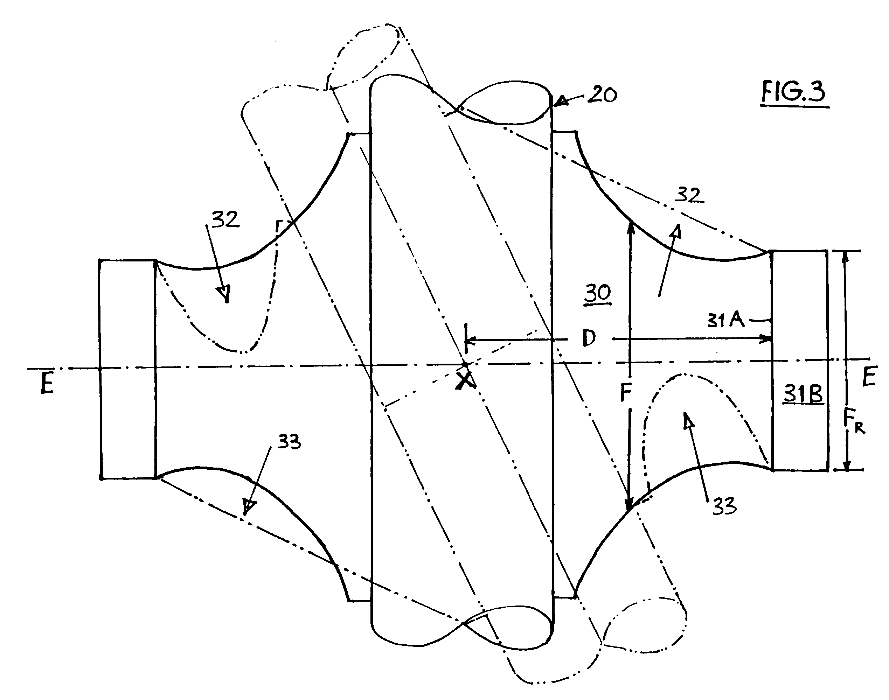

Figur 3 zeigt eine bevorzugte Ausführungsform einer Gummi-Elastomerscheibe. Die Ringnuten 32,33 sind spiegelbildlich zur Mittelebene E-E ausgebildet. Die ringförmige Außenseite 31A ist auf einem Metallring 31B vulkanisiert, der als Lagerring im zylindrischen Fortsatz 13 des Gehäuses 10 dient.

Die Ringnuten 32,33 sind relativ flach ausgebildet, schließen an ihrer Außenwand an den Metallring 31B an, und gehen zum Schaft 20 hin in einen manschettenartigen Bereich über.

Die Dicke F der Elastomerscheibe hat ihr Minimum F_{MIN} bei etwa 2/3 ihres Durchmessers D, bezogen auf die Dicke F_{R}, am Rand der Elastomerscheibe beträgt die "Tiefe" der Ringnuten 32,33 etwa 10% der Dicke F_{R} am Rand.

Diese Dimensionierung führt bei Auslenkungen des Schaftes 20 um 30°-40° zu einer Verformung der Elastomerscheibe 31, wie sie schematisch gestrichelt angedeutet ist: Der auf Zug beanspruchte Bereich streckt sich nahezu linear, der auf Druck beanspruchte Bereich wird gestaucht, wobei im ersteren Fall die Ringnut praktisch aufgehoben wird, im letzteren Fall die Ringnut Beginn und Ablauf des Stauchungsprozesses definiert und sich vertieft. Entscheidend ist, daß die hierbei entstehenden Oberflächenkräfte (Kräfte tangential zur Oberfläche der Elastomerscheibe) möglichst homogen verteilt werden, um extreme lokale Beanspruchungen der Oberfläche bei der Auslenkung des Schaftes 20 zu vermeiden, die die Lebensdauer des Gelenks verkürzen könnten.

Mit der in Figur 3 dargestellten Gestaltung der Elastomerscheibe 31 ist diese Bedingung erfüllbar.

Je nach Anwendungsbereich kann mit der Elastomerscheibe weiterin sowohl eine ausreichend präzise Lagerung, als auch eine definierte Verschwenkbarkeit mit reproduzierbaren Rückstellkräften, als auch eine Abdichtung des Gehäuse-Inneren mit einem einzigen Bauelement erreicht werden.

Bei dem in den Figuren 1 und 2 dargestellten Ausführungsbeispiel wird davon ausgegangen, daß eine besonders starke Rückstellung erzielt werden soll, wozu das separate Rückstellelement 40 vorgesehen ist, das die Rückstellwirkung des Elastomergelenks unterstützt.

Dieses Rückstellelement beinhaltet im wesentlichen eine Ringschulter 20A, die fest am oberen Teil des Steuerknüppels 20 angebracht ist (beispielsweise durch die Unterseite eines entsprechenden Ringes), ein verschiebbares Stellglied 22, das auf der Oberseite 12 des Gehäuses 10 aufsitzt und eine zwischen Ringschulter 20A und Stellglied 22 gehaltene Spiralfelder 41, die sich an diesen beiden Bauelementen abstützt. Das Stellglied 22 ist so konzipiert, daß es in der Null-Lage des Steuerknüppels 20 mit konisch verlaufenden Außenflanken am entsprechenden Innenrand der Öffnung 11 des Gehäuses 10 aufsitzt, wodurch ein gewisser Rast- und Zentriereffekt des Steuerknüppels 20 in seiner Null-Lage erreicht wird, der in dieser Schärfe vom Elastomergelenk alleine nicht darstellbar ist. In dieser Null-Lage befinden sich Ringschulter 20A und Oberseite des Stellgliedes 11 in einem Abstand A₀, entsprechend der Längenausdehnung der Feder 41.

Bei einer Verschwenkung des Steuerknüppels um den Schwenkwinkel α wird das Stellglied 22 aus seinem Sitz auf der Oberseite 12 des Gehäuses 10 herausgedrängt und mit zunehmendem Auslenkwinkel α verkürzt sich folglich der Abstand zwischen Ringschulter 20A und Stellglied 22 auf einen Wert A < A₀, mit der Folge, daß mit zunehmender Auslenkung die Feder 41 immer weiter zusammengepreßt wird und somit eine Rückstellkraft erzeugt wird, die proportional zum Auslenkwinkel α ist. Hierbei ist zunächst davon ausgegangen, daß die Ebene F-F der Oberseite 12 des Gehäuses 10 parallel zur Mittelebene E-E des Elastomergelenks verläuft; es ist jedoch ohne weiteres auch vorstellbar, daß durch eine Profilierung oder Formung der Oberfläche 12 durch entsprechendes "Ansprechen" des Stellgliedes 22 eine spezifisch gewünschte Rückstellcharakteristik erreichbar ist.

Innerhalb des Gehäuses und unterhalt des Elastomergelenks 30 ist genügend Raum zur Verfügung, um dort Rasteinrichtungen zur Unterteilung der Schwenkbewegung des Steuerknüppels in Rastschritte unterzubringen, als auch an sich bekannte Wandlerelemente, wie beispielsweise Bügel, die ein Langloch aufweisen, das vom Steuerknüppel durchsetzt wird und in die beiden Hauptrichtungen x und y verschiebbar sind, wobei sie an der Innenwandung des Gehäuses so gelagert sind, daß sie dort beispielsweise entsprechend ihrer Position proportional elektrische Signale erzeugen. Hier sind mehrere Varianten solcher Einrichtungen denkbar, die auch in einem kleinen und kompakten Gehäuse 10 ausreichend Platz finden und das Gesamtgewicht des Handsteuergerätes nicht unnötig erhöhen.

Ein bevorzugtes Ausführungsbeispiel einer solchen Rasteinrichtung ist in der Querschnittsdarstellung der Figur 1 und den Figuren 4 bis 8 dargestellt und wird im folgenden näher erläutert:

Bei dem Einsatz des Handsteuergerätes ist es oft wünschenswert, bei der Auslenkung des Steuerknüppels einen Rasteffekt zu erzielen, ähnlich wie beispielsweise bei einem als Regler vorgesehenen Potentiometer, bei dem eine gewisse Anzahl von vorgegebenen Raststellungen dem Benutzer eine zusätzliche Information über die jeweilige Stellposition des Stellgliedes vermittelt. Insbesondere bei Handsteuergeräten, wie sie zur Fernsteuerung beispielsweise von Kränen oder ähnlichem eingesetzt werden, ist eine solche zusätzliche Information, die über die Empfindung der Hand vermittelt wird, von besonderer Bedeutung, da der Blick der Bedienerperson auch schon aus Sicherheitsgründen in der Regel auf das fernzubedienende Gerät gerichtet sein muß und somit beispielsweise optische Anzeigen am Handsteuergerät die Aufmerksamkeit des Bedieners nur ablenken würden.

Es sind eine Vielzahl von Rasteinrichtungen in verschiedenen konstruktiven Varianten bekannt, bei denen in der Regel eine Wechselwirkung mit dem unteren Ende des Steuerknüppels besteht, derart, daß die Spitze des Steuerknüppels bei ihrer Auslenkbewegung auf unterschiedlichen Widerstand stößt, was sich dem Benutzer dann durch entsprechende Stellinformation mitteilt.

Meistens sind für die Rasteinrichtungen separate Bauteile vorgesehen, die mehr oder weniger aufwendig konstruiert sind und separat in das Gehäuse des Handsteuergerätes eingepaßt werden müssen, wobei auch eine erhebliche Justierarbeit anfällt; insgesamt stellen derartige Rasteinrichtungen dann ebenfalls einen Kostenfaktor bei Handsteuergeräten dar, der möglichst gering sein sollte.

Der Grundgedanke der gezeigten Ausführungsform besteht darin, daß lediglich ein einziges Formteil 10A vorgesehen ist und daß die Rastpositionen und die gewünschte stufige Auslenkcharakteristik einfach dadurch erreicht wird, daß die kugelabschnittförmige Oberfläche des Formteils 10A netzartig mit Rastnuten überzogen ist.

Zweckmäßigerweise ist der Außenquerschnitt dabei angepaßt an den Innenquerschnitt des Gehäuses des Handsteuergerätes, so daß gemäß einer vorteilhaften Ausbildung ein solches einstückiges Rasteinrichtungs-Formteil auch gleichzeitig den Boden des Gehäuses des Handsteuergerätes bilden kann, mit anderen Worten, für die Rasteinrichtung als solche sind überhaupt keine separaten Bauteile erforderlich, sondern bei dieser Ausgestaltung wird die Rastwirkung durch eine spezifische Gestaltung des Bodenteils des Gehäuses des Handsteuergerätes erreicht.

Wenn das Formteil dazu noch einen umlaufenden Rand an seiner Unterkante aufweist, wird dadurch auch eine Lagefixierung des Formteils in der Richtung der Längsachse des Gehäuses erreicht, da ein solcher umlaufender Rand dann als Anschlagschulter wirkt, auf dem die Wandung des Gehäuses aufsitzt. Bei einem an den Innenquerschnitt des Gehäuses angepaßten Außenquerschnitt des Formteils einerseits und der erwähnten Randschulter andererseits ist somit eine genaue Positionierung des Formteils im Handsteuergerät erreicht, zusätzliche Justiervorgänge sind nicht erforderlich, die mit den Rastnuten versehene Oberfläche des Formteils befindet sich dann zwangsläufig in genau der Position, die für die Zusammenwirkung mit dem Steuerknüppel einmal vorgegeben und definiert ist.

Die Anzahl der Rastnuten in den beiden Hauptrichtungen (x und y) entspricht dann den vorgegebenen Schaltstufen, wobei die Formgebung des Querschnittes der Rastnuten in Zusammenwirken mit der Gestaltung des unteren Endes des Steuerknüppels die "Schaltcharakteristik" im Sinne einer mehr oder weniger harten oder weichen Stufencharakteristik bei der Auslenkung des Steuerknüppels bestimmt.

Das Formteil 10A besteht im wesentlichen aus einem plattenförmigen Teil, dessen Querschnitt an den Innenquerschnitt des Gehäuses 30 des Handsteuergerätes so angepaßt ist, daß es den Boden des Gehäuses 30 bildet, dessen Wandungen dann auf einem umlaufenden Rand 11A aufsitzen. Die obere, d.h. zum Innenraum des Gehäuses 30 zugewandte Fläche dieses Formteils 10 ist kugelabschnittförmig ausgebildet, wobei der Radius der zugehörigen Kugel im wesentlichen dem Radius der Kugeloberfläche entspricht, auf dem sich das Ende des Steuerknüppels 20 bei der Auslenkbewegung bewegt (Radius R in Figur 2).

Ein solches Formteil 10A kann beispielsweise aus Kunststoff bestehen (beispielsweise spritzgegossen), es kann jedoch auch aus Keramikwerkstoffen oder Metall sein.

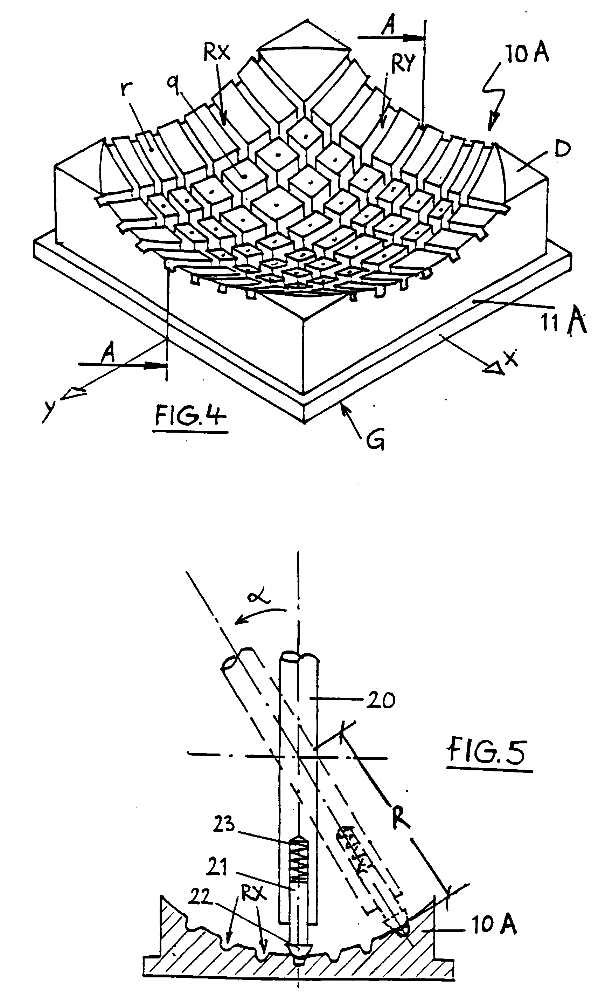

Diese kugelabschnittförmige Oberfläche ist mit einem Netz oder Gitter von Rastnuten RX,RY überzogen, die in den beiden Hauptrichtungen x und y des Steuerknüppels 20 verlaufen. Im Mittelteil dieser Oberfläche entstehen durch diese Rastnuten RX,RY quadratische Teilflächen q, die in Figur 4 mit einem Punkt auf ihrer Oberseite gekennzeichnet sind. Dieser mittlere, quadratische Bereich wird von einem umlaufenden Randbereich umschlossen, in dem die Rastnuten RX,RY die Oberfläche in rechteckige Teilflächen r unterteilt, deren Längsachse zur Mitte des Formteils 10A hin zeigen.

In den Ecken des Randbereichs geht die kugelabschnittförmige Gestalt der Oberfläche in im wesentlichen dreieckige Endflächen D über, die parallel zur Grundfläche G des Formteils verlaufen, und die beispielsweise den "Rest" der ursprünglich planen Oberfläche des Formteils 10 bilden, vor der Ausformung der kugelabschnittförmigen Oberfläche.
Dieses, den Boden des Gehäuses 30 bildende Formteil 10A stellt somit den einen Teil der Rasteinrichtung dar.

Der andere Teil der Rasteinrichtung befindet sich im Steuerknüppel 20 und besteht aus einem im Steuerknüppel 20 gelagerten und federbeaufschlagten Stößel 21, dessen unteres Ende 23 mit den Rastnuten RX,RY zusammenwirkt, wobei dann im Bereich jeder Rastnut infolge der Feder 23 der Stößel in die Nut je nach deren Formgebung und der Formgebung des unteren Endes 22 mehr oder weniger tief eintaucht und somit ein mehr oder weniger ausgeprägtes "Rastgefühl" bei der Bedienung des Handsteuergerätes hervorruft.

Beim dargestellten Ausführungsbeispiel sind die Rastnuten hinsichtlich ihres Querschnitts im wesentlichen V-förmig (Figur 8), wobei die Übergangsbereiche abgerundet sind, um eine all zu harte Rastcharakteristik zu vermeiden.

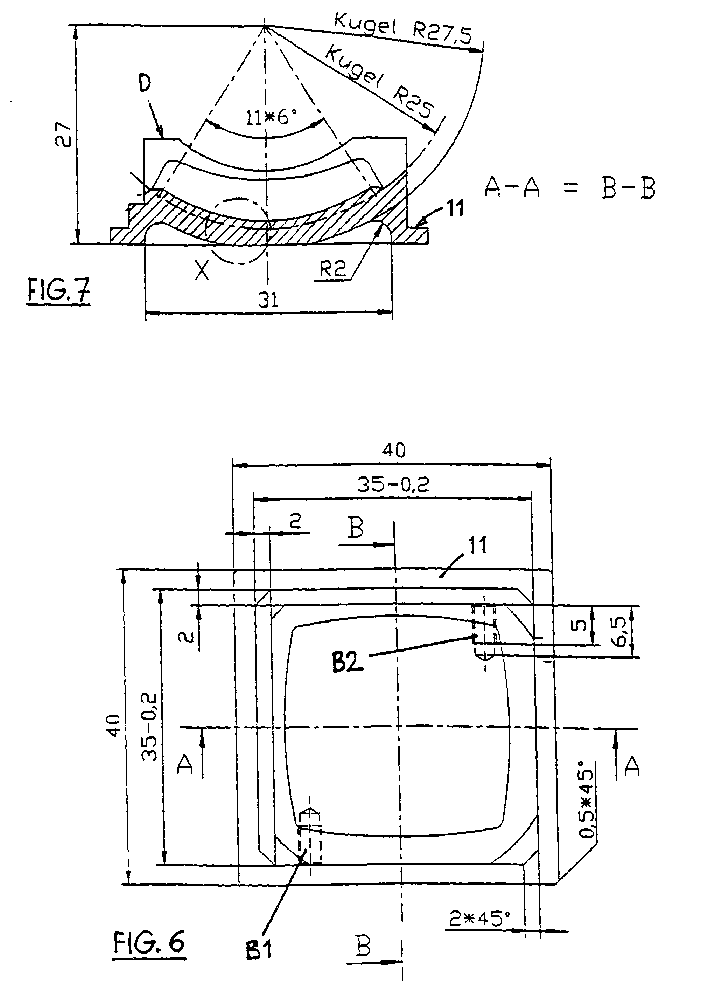

Das Formteil 10A kann ohne Schwierigkeiten in das Gehäuse 30 von unten eingeschoben werden und dort beispielsweise mit zwei diagonal gegenüberliegender Bolzenverbindungen B1,B2 fixiert werden (Figur 6).

## Patentansprüche

1. Handsteuergerät mit einem Steuerknüppel (20), mit einem Gehäuse (10), in dem der Steuerknüppel (20) um zwei orthogonale Achsen um einen Fixpunkt (X) verschwenkbar in einem Lager gehalten ist, und mit Wandlereinrichtungen, die die Auslenkung des Steuerknüppels aus seiner Nullposition in ein elektrisches Signal umsetzen, wobei das Lager als randseitig im Gehäuse (10) gehaltenes Elastomergelenk (30) ausgebildet ist, das in seinem Mittelbereich den Steuerknüppel (20) umschließt und fixiert, sowie mit einem Führungsorgan zur Stabilisierung derart, daß bei der Auslenkung des Steuerknüppels (20) aus allen Auslenkpositionen zur Nullposition des Steuerknüppels (20) hin eine elastische Rückstellkraft bei gleichzeitiger Aufrechterhaltung der räumlichen Lage des Fixpunktes (X) erreicht wird,
dadurch gekennzeichnet, daß das untere Ende des Steuerknüppels (20) mit einem Formteil (10A) als Führungsorgan zusammenwirkt, das den Boden des Gehäuses (10) bildet und dessen mit dem Steuerknüppel (20) zusammenwirkende Oberfläche eine kugelabschnittförmige Gestalt hat, wobei der Radius der zugehörigen Kugel dem Radius (R) der Kugeloberfläche entspricht, auf dem sich das untere Ende des Steuerknüppels (20) bei der Auslenkbewegung bewegt, und daß die Oberflächengestalt des Elastomergelenks (30) mittels Ringnuten (32, 33) und manschettenartig ausgebildetem Mittelbereich (34) derart vorgegeben ist, daß bei maximaler Auslenkung des Steuerknüppels (20) eine im wesentlichen geradlinige Oberflächen-Schnittlinie im Bereich größter Dehnung entsteht, bei zunehmender Vertiefung der auf Stauchung beanspruchten Bereiche der Ringnuten (32, 33).

2. Handsteuergerät nach Anspruch 1, dadurch gekennzeichnet, daß das Elastomergelenk (30) randseitig in einen Metallring (31B) einvulkanisiert ist, der seinerseits im Gehäuse (10) gehalten ist.

3. Handsteuergerät nach Anspruch 1, dadurch gekennzeichnet, daß das Elastomergelenk (30) mit seinem manschettenartig ausgebildeten Mittelbereich (34) auf den Steuerknüppel (20) vulkanisiert ist.

4. Handsteuergerät nach Anspruch 1, dadurch gekennzeichnet, daß das Formteil (10A) einen umlaufenden Rand (11A) besitzt, auf dem die Wandung des Gehäuses (10) aufsitzt.

5. Handsteuergerät nach Anspruch 1, dadurch gekennzeichnet, daß das Formteil (10A) aus Kunststoff, Sinter-Keramik oder Sinter-Metall besteht.

6. Handsteuergerät nach Anspruch 1, dadurch gekennzeichnet, daß im unteren Ende des Steuerknüppels (20) ein federbeaufschlagter Stößel (21) gelagert ist, dessen untere Spitze (22) in die Rastnuten (RX,RY) eingreift, die die Oberfläche des Formteils (10A) gitterartig überziehen.

7. Handsteuergerät nach Anspruch 6, dadurch gekennzeichnet, daß die Formgebung der unteren Spitze (22) des Stößels (21) und der Rastnuten (RX,RY) sowie die Federcharakteristik der Feder (23) des Stößels aufeinander derart abgestimmt und/oder einstellbar sind, daß die erzeugten Schaltstufen bei der Handhabung wahrnehmbar sind, ohne die Funktion zu beeinträchtigen.

8. Handsteuergerät nach Anspruch 7, dadurch gekennzeichnet, daß die Rastnuten (RX,RY) im wesentlichen V-förmigen oder halbkreisförmigen Querschnitt aufweisen, und daß die Spitze (22) des Stößels (21) im wesentlichen kugelabschnittartig ausgebildet ist.

9. Handsteuergerät nach Anspruch 6, dadurch gekennzeichnet, daß in einem mittleren, quadratischen Bereich der Oberfläche das Gitter der Rastnuten (RX,RY) die Oberfläche in quadratische Teilflächen (q) unterteilt, daß außerhalb dieses mittleren Bereichs ein umlaufender Randbereich definiert ist, in dem die Rastnuten (RX,RY) die Oberfläche in rechteckige Teilflächen (r) unterteilt, deren Längsachse zur Mitte des Formteils (10A) zeigt, und daß in den Ecken des umlaufenden Randbereichs die kugelabschnittförmige Gestalt der Oberfläche in im wesentlichen dreieckige Eckflächen (D) übergeht, die parallel zur Grundfläche (G) des Formteils (10A) verlaufen.

## Claims

1. Manual control mechanism, having a control lever (20), a housing (10) in which the control lever (20) is retained in a bearing so as to be pivotable about two orthogonal axes around a fixed point (X), and converter means which convert the deflection of the control lever from its zero position into an electrical signal, the bearing being configured as an elastomeric pivot joint (30), which is retained in the housing (10) at the edge thereof and surrounds and secures the control lever (20) in its central region, as well as having a guide member for stabilisation so that, when the control lever (20) deflects from all of the deflection positions towards the zero position of the control lever (20), a resilient restoring force is achieved with a simultaneous retention of the spatial position of the fixed point (X), characterised in that the lower end of the control lever (20) co-operates with a moulded component part (10A) as the guide member, which forms the base of the housing (10) and the surface of which, which co-operates with the control lever (20), has a spherical-segment-shaped configuration, the radius of the associated sphere coresponding to the radius (R) of the spherical surface, on which radius the lower end of the control lever (20) moves during the deflection movement, and in that the surface configuration of the elastomeric pivot joint (30) is predetermined by means of annular grooves (32, 33) and a sleeve-like central region (34) in such a manner that, with the maximum deflection of the control lever (20), a substantially rectilinear surface line of intersection is produced in the region of greatest expansion, with an increasing deepening of the compressed regions of the annular grooves (32, 33).

2. Manual control mechanism according to claim 1, characterised in that the elastomeric pivot joint (30) is vulcanised into a metal ring (31B) at the edge thereof, which ring, for its part, is retained in the housing (10).

3. Manual control mechanism according to claim 1, characterised in that the elastomeric pivot joint (30) is vulcanised onto the control lever (20) with its sleeve-like central region (34).

4. Manual control mechanism according to claim 1, characterised in that the moulded component part (10A) has a circumferential edge (11A), on which the wall of the housing (10) sits.

5. Manual control mechanism according to claim 1, characterised in that the moulded component part (10A) is formed from plastics material, sintered ceramics or sintered metal.

6. Manual control mechanism according to claim 1, characterised in that a spring-loaded ram (21) is mounted in the lower end of the control lever (20), and the lower tip (22) of said ram engages in the locking grooves (RX,RY) which are distributed over the surface of the moulded component part (10A) in a lattice-like manner.

7. Manual control mechanism according to claim 6, characterised in that the shaping of the lower tip (22) of the ram (21) and of the locking grooves (RX,RY) as well as the resilient characteristics of the spring (23) of the ram are so adapted and/or adjustable to one another that the switching steps produced are perceptible during the operation without impairing the function.

8. Manual control mechanism according to claim 7, characterised in that the locking grooves (RX,RY) have a substantially V-shaped or semicircular cross-section, and in that the tip (22) of the ram (21) has a substantially spherical-segment-shaped configuration.

9. Manual control mechanism according to claim 6, characterised in that the lattice of the locking grooves (RX,RY) divides the surface into square portions (q) in a central, square region of the surface, in that a circumferential edge region is defined externally of this central region, in which edge region the locking grooves (RX,RY) divide the surface into rectangular portions (r), the longitudinal axis of which areas extends towards the centre of the moulded component part (10A), and in that the spherical-segment-shaped configuration of the surface extends into substantially triangular corner areas (D) in the corners of the circumferential edge region, which corner areas extend parallel to the base face (G) of the moulded component part (10A).

## Revendications

1. Appareil de commande manuelle comportant un manche à balai (20), un boîtier (10) dans lequel le manche à balai (20) est monté dans un palier de façon à pouvoir tourner autour de deux axes orthogonaux autour d'un point fixe (X), et des dispositifs convertisseurs qui convertissent la déviation du manche à balai de sa position zéro en un signal électrique, le palier étant constitué d'une articulation en élastomère (30) montée sur son bord dans le boîtier (10) qui entoure et fixe le manche à balai (20) dans sa partie médiane, ainsi qu'un organe de guidage pour la stabilisation de façon telle que lors de la déviation du manche à balai (20) de toutes ses positions déviées vers sa position zéro soit obtenue une force de rappel élastique avec en même temps maintien de la position spatiale du point fixe (X),
caractérisé par le fait que l'extrémité inférieure du manche à balai (20) coopère avec un élément façonné (10A) servant d'organe de guidage qui forme le fond du boîtier (10) et dont la surface coopérant avec le manche à balai (20) est en forme de calotte sphérique, le rayon de la sphère associée correspondant au rayon (R) de la surface sphérique sur laquelle l'extrémité inférieure du manche à balai (20) se déplace lors de la déviation, et que la forme de la surface de l'articulation en élastomère (30) est fixée au moyen de gorges annulaires (32, 33) et d'une partie centrale du genre manchon (34) de façon telle qu'en cas de déviation maximale du manche à balai (20) soit créée dans la zone de plus grande dilatation une ligne d'intersection de surfaces sensiblement rectiligne, avec approfondissement croissant des zones rétreintes des gorges annulaires (32, 33).

2. Appareil de commande manuelle selon la revendication 1, caractérisé par le fait que l'articulation en élastomère (30) est montée avec union par vulcanisation sur son bord dans une bague métallique (31B) qui est elle-même montée dans le boîtier (10).

3. Appareil de commande manuelle selon la revendication 1, caractérisé par le fait que la partie centrale du genre manchon (34) de l'articulation en élastomère (30) est vulcanisée sur le manche à balai (20).

4. Appareil de commande manuelle selon la revendication 1, caractérisé par le fait que l'élément façonné (10A) a un bord périphérique (11A) sur lequel repose la paroi du boîtier (10).

5. Appareil de commande manuelle selon la revendication 1, caractérisé par le fait que l'élément façonné (10A) est en matière plastique, en céramique frittée ou en métal fritté.

6. Appareil de commande manuelle selon la revendication 1, caractérisé par le fait que dans l'extrémité inférieure du manche à balai (20) est monté un poussoir à ressort (21) dont l'extrémité inférieure (22) s'engage dans les rainures d'encliquetage (RX, RY) qui couvrent à la manière d'un quadrillage la surface de l'élément façonné (10A).

7. Appareil de commande manuelle selon la revendication 6, caractérisé par le fait que la forme de l'extrémité inférieure (22) du poussoir (21) et des rainures d'encliquetage (RX, RY) et la caractéristique d'élasticité du ressort (23) du poussoir sont accordées entre elles et/ou réglables de façon telle que les crans produits soient perceptibles lors de la manoeuvre sans nuire au fonctionnement.

8. Appareil de commande manuelle selon la revendication 7, caractérisé par le fait que la section des rainures d'encliquetage (RX, RY) est sensiblement en forme de V ou semi-circulaire et que l'extrémité (22) du poussoir (21) est sensiblement en forme de calotte sphérique.

9. Appareil de commande manuelle selon la revendication 6, caractérisé par le fait que dans une partie centrale carrée de la surface, le quadrillage des rainures d'encliquetage (RX, RY) divise la surface en surfaces partielles carrées (q), qu'à l'extérieur de cette partie centrale est formée une partie de bord périphérique dans laquelle les rainures d'encliquetage (RX, RY) divisent la surface en surfaces partielles rectangulaires (r) dont l'axe longitudinal est dirigé vers le milieu de l'élément façonné (10A), et que dans les coins de la partie de bord périphérique, la forme en calotte sphérique de la surface se transforme en surfaces de coin sensiblement triangulaires (D) qui s'étendent parallèlement à la surface de base (G) de l'élément façonné (10A).
